# EUROPÄISCHE PATENTSCHRIFT

(11) **EP 4 183 566 B1**
(45) Veröffentlichungstag und Bekanntmachung des Hinweises auf die Patenterteilung: **20.11.2024**
(21) Anmeldenummer: 21209486.6
(22) Anmeldetag: 22.11.2021
(51) Int. Cl.: B31B 70/84, B29C 65/00

(54) **VORRICHTUNG ZUM EINSIEGELN VON DREIDIMENSIONALEN OBJEKTEN IN DIE BEUTELÖFFNUNG EINES FOLIENBEUTELS**
DEVICE FOR SEALING THREE-DIMENSIONAL OBJECTS IN THE BAG OPENING OF A FILM BAG
DISPOSITIF DE SCELLAGE DES OBJETS TRIDIMENSIONNELS DANS L'OUVERTURE D'UN SAC EN FEUILLE

(43) Veröffentlichungstag der Anmeldung: 24.05.2023
(73) Patentinhaber: Harro Höfliger Verpackungsmaschinen GmbH, 71573 Allmersbach im Tal (DE)
(72) Erfinder: Hjordt, Nico, 71573 Allmersbach im Tal (DE); Birkhold, Daniel, 71573 Allmersbach im Tal (DE); Graf, Timo, 71573 Allmersbach im Tal (DE)
(74) Vertreter: Gleim Petri Patent- und Rechtsanwaltspartnerschaft mbB

(56) Entgegenhaltungen:
- WO-A2-99/59876

## Beschreibung

### TECHNISCHES GEBIET

Die Erfindung betrifft eine Vorrichtung und ein Verfahren zum Einsiegeln von dreidimensionalen Objekten in die Beutelöffnung eines Folienbeutels. Bei den Folienbeuteln handelt es sich um biegeschlaffe Behältnisse, die in der Regel aus einer Polymerfolie bestehen. Derartige Folienbeutel können beispielsweise für die Verpackung beziehungsweise zeitweilige Aufbewahrung von Lebensmitteln oder von pharmazeutischen Produkten eingesetzt werden.

### STAND DER TECHNIK

Die Folienbeutel sind in der Regel rechteckig ausgeführt und weisen an einer Seite eine Beutelöffnung auf. In diese Beutelöffnung soll ein dreidimensionales Objekt eingesiegelt werden, wodurch die Beutelöffnung verschlossen wird. Bei diesem dreidimensionalen Objekt kann es sich sowohl um ein flexibles Objekt, als auch um ein starres Objekt handeln. Auf diese Weise können beispielsweise Lebensmittelverpackungen für Fruchtmus hergestellt werden, wie sie insbesondere von Kleinkindern konsumiert werden. In derartigen Folienbeuteln ist ein starrer Saugansatz eingesiegelt, über den das Fruchtmus von den Kindern direkt aus dem Folienbeutel gesaugt werden kann. Auch bei einigen Getränkepäckchen sind vergleichbare Trinkansätze vorhanden, die ebenfalls in die Folienbeutel eingesiegelt werden. Die Trink- beziehungsweise Saugansätze können dabei mit einem Verschlusselement versehen sein, so dass die entsprechenden Folienbeutel auch wieder verschlossen werden können. Auch andere Anwendungsbereiche insbesondere im Lebensmittelbereich und im pharmazeutischen Bereich sind grundsätzlich möglich.

Die Folienbeutel können vorgefertigt von einem Stapel entnommen werden. Alternativ dazu können die Folienbeutel auch in einer vorgelagerten Arbeitsstation durch Umschlagen einer Materialbahn und durch anschließendes Längs- und Querverschweißen dieser Bahn hergestellt werden. Die durch das Zusammenfalten entstandene doppellagige Materialbahn ist an ihrem oberen Rand offen und kann nach dem abschnittsweisen Anbringen der vertikalen Schweißnähte und der unteren horizontalen Schweißnähte zwischen den vertikalen Schweißnähten zertrennt werden. Dadurch entstehen einzelne, oben noch nicht verschlossene Folienbeutel.

Bevor das dreidimensionale Objekt in die Beutelöffnung eingesiegelt werden kann, müssen zunächst die oberen freien Ränder der Beutelöffnung auseinandergezogen werden. Ist der Beutel nicht korrekt geöffnet, kann das einzusiegelnde Objekt nicht exakt positioniert werden. Dadurch kann es zu Undichtigkeiten des Folienbeutels kommen.

Bekannt sind getaktet arbeitende Flachbeutelmaschinen, mittels denen Flachbeutel mit einem flachen Produkt befüllt und anschließend versiegelt werden. Das Öffnen der Flachbeutel erfolgt hier in der Regel in zwei Arbeitsgängen erfolgt. In einer ersten Arbeitsstation werden die Beutel durch seitliche Greifer erfasst und mittels dieser Greifer zu einer zweiten Arbeitsstation transportiert. Diese Greifer klemmen die beiden einander gegenüber liegenden Seitenränder des Beutels jeweils ein. In der zweiten Arbeitsstation werden die Beutel geöffnet, indem die beiden oberen Beutelränder durch je einen von außen einwirkenden Sauger angesaugt werden. Da sich die oberen Beutelränder bei dieser Bewegung voneinander wegbewegen, müssen sich die Seitenränder des betreffenden Beutels entsprechend aufeinander zu bewegen. Folglich müssen sich auch die beiden Greifer aufeinander zu bewegen. Das Auseinanderfahren der Sauger muss daher mit dem Aufeinanderzubewegen der Greifer koordiniert werden. Dies bedeutet einen nicht unerheblichen Steuerungsaufwand. Aufgrund der unterschiedlichen Größen der Beutel sollte diese Steuerungsabstimmung darüber hinaus auch variabel sein, um entsprechende Anpassungen zu ermöglichen.

Aus der DE 295 02 128 U1 ist eine Flachbeutelmaschine bekannt, bei der die Beutel bereits während ihres Transports von einer Arbeitsstation zur anderen geöffnet werden. Auf diese Weise kann zumindest eine Arbeitsstation eingespart werden. Dies ermöglicht es, bei vergleichbaren Platzverhältnissen eine zusätzliche Arbeitsstation - beispielsweise zum Befüllen der Beutel -vorzusehen. Dadurch können mehrere Füllstationen nacheinander angeordnet werden, so dass das Füllgut aus mehreren Mischungskomponenten zusammengesetzt werden kann. Das Öffnen während des Transports kann hier dadurch realisiert werden, dass der gegenseitige Abstand der beiden seitlichen Greifer kleiner wird, je größer der zurückgelegte Weg von der ersten Arbeitsstation ist. Dies kann beispielsweise durch eine Führung für die Greifer realisiert werden, die etwa V-förmig aufeinander zu gerichtet ist.

Aus der WO 99/59876 A2 ist eine Vorrichtung zum Einsiegeln von dreidimensionalen Objekten in die Beutelöffnung eines Folienbeutels bekannt. Die Vorrichtung besitzt zwei Vakuumsauger und zwei Klemmbacken, mittels denen die Beutelöffnung geöffnet und gespreizt gehalten werden kann. Nach dem Einsetzen des dreidimensionalen Objekts kann die Beutelöffnung versiegelt werden.

Beim Versiegeln des offenen Beutelrands und dem Einsiegeln des dreidimensionalen Objekts soll der Beutelrand dann wieder möglichst nach außen gespannt werden, damit während des Siegelprozesses keine Falten oder Kanäle in der Siegelnaht entstehen. Durch solche Falten oder Kanäle in der Siegelnaht würde der fertige Beutel undicht werden. Das Spannen des offenen Beutelrands erfolgt dabei in der Regel in einer separaten Arbeitsstation. Dadurch ergeben sich häufig Schwierigkeiten bei der Bearbeitung von schmalen Beuteln.

### DARSTELLUNG DER ERFINDUNG

Ausgehend von diesem vorbekannten Stand der Technik liegt der Erfindung die Aufgabe zugrunde, eine verbesserte Vorrichtung zum Einsiegeln von dreidimensionalen Objekten in die Beutelöffnung eines Folienbeutels anzugeben, die eine möglichst exakte Siegelnaht um das dreidimensionale Objekt herum ermöglicht.

Die erfindungsgemäße Vorrichtung zum Einsiegeln von dreidimensionalen Objekten in die Beutelöffnung eines Folienbeutels ist durch die Merkmale des Hauptanspruchs 1 gegeben. Ein erfindungsgemäßes Verfahren zum Einsiegeln von dreidimensionalen Objekten in die Beutelöffnung eines Folienbeutels ist durch die Merkmale des nebengeordneten Anspruchs 10 gegeben. Sinnvolle Weiterbildungen der Erfindung sind Gegenstand von sich an diese Ansprüche anschließenden weiteren Ansprüchen.

Die erfindungsgemäße Vorrichtung zum Einsiegeln von dreidimensionalen Objekten in die Beutelöffnung eines Folienbeutels besitzt eine Halteeinrichtung für die Folienbeutel sowie eine Siegeleinrichtung zum Einsiegeln eines dreidimensionalen Objekts in die Beutelöffnung des Folienbeutels. Die Halteeinrichtung besitzt beidseitig jeweils ein Paar Klemmschuhe, zwischen denen der Rand der Flachbeutel gehalten wird. Die Siegeleinrichtung besitzt ein Paar Siegelbacken, zwischen denen die Beutelöffnung der Folienbeutel versiegelt werden kann. Erfindungsgemäß können die beiden Klemmschuh-Paare der Halteeinrichtung auseinandergefahren werden, so dass die Beutelöffnung nach außen gezogen und damit um das einzusiegelnde Objekt gespannt wird. Eine solche gespannte Beutelöffnung ermöglicht eine saubere und exakte Siegelnaht. In der Siegelnaht können somit keine Falten oder Kanäle entstehen, so dass keine Undichtigkeiten des Folienbeutels auftreten können.

Die Klemmschuhe sind jeweils an einer Feder, insbesondere an einer Biegefeder, befestigt. Eine solche Feder ist in ihrer Form so ausgeführt, dass in bei der Bewegung der Siegelbacken aufeinander zu eine überlagerte Bewegung der Federn voneinander weg erfolgen kann. Beim Schließen der beiden Siegelbacken treffen die Klemmschuhe kurz vor dem Zusammentreffen der Siegelbacken auf die äußeren Ränder des Folienbeutels und klemmen diesen äußeren Rand jeweils zwischen sich ein. Durch das weitere Schließen der Siegelbacken werden die äußeren Ränder durch die Klemmschuhe nach außen gezogen, so dass die Beutelöffnung auf Spannung gehalten wird. Durch dieses Auseinanderziehen erhält man auch bei einem einzusiegelnden dreidimensionalen Objekt eine glatte Beutelöffnung. Dies ermöglicht eine glatte Siegelung ohne Falten und Kanäle.

Durch die erfindungsgemäße Vorrichtung zum Einsiegeln von dreidimensionalen Objekten in die Beutelöffnung eines Folienbeutels ist keine separate Station für das Spreizen der Beutelöffnung erforderlich. Vielmehr konnte die komplexe Funktion des Spreizens der Beutelöffnung in ein konstruktiv einfaches Bauteil integriert werden, das einfach an unterschiedliche Anforderungen angepasst werden kann. Die kompakte Ausführung der Halteeinrichtung und die Ausführung sehr nahe an den Siegelbacken ermöglicht es, selbst schmale Beutel rasch und reproduzierbar spreizen zu können.

Vorzugsweise können die Klemmschuhe mittels eines Gelenks an den jeweiligen Federn gelagert sein. Die Kontaktflächen eines Klemmschuh-Paares können dadurch in jeder Position der Federn immer parallel zu dem Folienbeutel ausgerichtet sein.

Grundsätzlich kann die Kontaktfläche der Klemmschuhe mit einer beliebigen, beispielsweise auch mit einer glatten Oberfläche ausgebildet sein. Zumindest eine der beiden Klemmschuhe eines Klemmschuh-Paares kann vorzugsweise eine profilierte Kontaktfläche aufweisen.

Die Kontaktfläche der beiden Klemmschuh-Paare kann vorzugsweise jeweils ein Stück weit über die Siegelbacken überstehen. Dadurch können die Klemmschuhe die Ränder des Folienbeutels rechtzeitig vor dem Kontakt mit den Siegelbacken greifen und auseinanderziehen.

Die Klemmschuhe können jeweils in einer Langloch-Ausnehmung geführt werden. Dies ermöglicht eine einfache und sichere Führung, die ohne größeren konstruktiven Aufwand realisiert werden kann.

In einer besonders vorteilhaften Ausführungsform ist die Siegeleinrichtung gemeinsam mit der Halteeinrichtung an einem Paar Führungselementen befestigt. Die Bewegung der Halteeinrichtung ist dadurch in die Schließbewegung der Siegeleinrichtung integriert. Dadurch sind keine zusätzlichen Aktoren erforderlich, so dass eine sehr kompakte Bauweise realisiert werden kann.

In einer vorteilhaften Ausführungsform kann die Vorrichtung zum Einsiegeln von dreidimensionalen Objekten in die Beutelöffnung eines Folienbeutels über ein Paar Klemmbacken verfügen. Das Klemmbacken-Paar ist in diesem Fall vorauseilend zu den Siegelbacken angeordnet. Das in der Beutelöffnung des Folienbeutels einzusiegelnde dreidimensionale Objekt kann durch die Klemmbacken zunächst zusammengedrückt und damit kollabiert werden, bevor es zu der eigentlichen Siegelung des Flachbeutels kommt. Eine solche Ausführungsform ist daher insbesondere bei flexiblen Ventilen vorteilhaft, während bei nicht-flexiblen Ventilen auf das Klemmbacken-Paar verzichtet werden kann. Das Klemmbacken-Paar kann vorzugsweise federnd gelagert sein, so dass es nicht versehentlich zu einer Beschädigung des dreidimensionalen Objekts kommen kann.

Die Form der Folienbeutel kann grundsätzlich variabel ausgebildet sein. So können auch unregelmäßig geformte Folienbeutel mit der erfindungsgemäßen Vorrichtung verarbeitet werden.

Weitere Vorteile und Merkmale der Erfindung sind den in den Ansprüchen ferner angegebenen Merkmalen sowie dem nachstehenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:

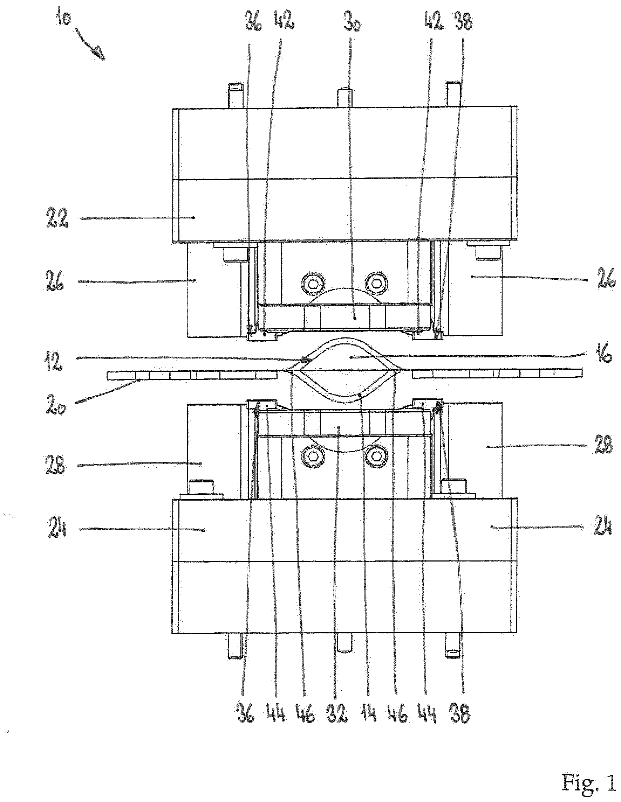

- Fig. 1: eine Seitenansicht einer erfindungsgemäßen Vorrichtung zum Einsiegeln von dreidimensionalen Objekten in die Beutelöffnung eines Folienbeutels vor dem Schließen der Siegelbacken und

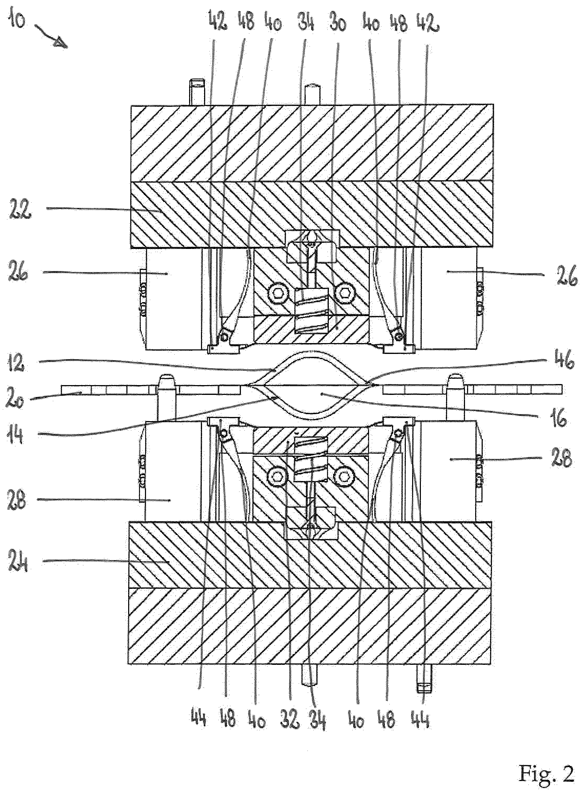

- Fig. 2: einen Querschnitt durch die Vorrichtung zum Einsiegeln von dreidimensionalen Objekten in die Beutelöffnung eines Folienbeutels gemäß Fig. 1.

### WEGE ZUM AUSFÜHREN DER ERFINDUNG

Die erfindungsgemäße Vorrichtung 10 zum Einsiegeln von dreidimensionalen Objekten in die Beutelöffnung eines Folienbeutels ist im vorliegenden Beispielsfall so ausgerichtet, dass vorgesiegelte Folienbeutel 12 mit einer einseitigen Beutelöffnung 14 liegend versiegelt werden. Im Gegensatz dazu wäre es auch möglich, die Folienbeutel 12 stehend beziehungsweise hängend zu transportieren und zu versiegeln.

Der vorgesiegelte Folienbeutel 12 wurde in einer vorgelagerten, hier nicht dargestellten Bearbeitungseinrichtung geöffnet. Dabei wurde ein dreidimensionales Objekt 16 in der Beutelöffnung platziert. Der so vorbereitete Folienbeutel 12 wird der Vorrichtung 10 auf einer Unterstützungsplatte 20 liegend zugeführt. Oberhalb und unterhalb der Unterstützungsplatte 20 ist jeweils ein Führungselement 22, 24 vorhanden. Die Führungselemente 22, 24 können über eine hier nicht dargestellte Antriebseinheit in einer vertikalen Bewegung aufeinander zu bewegt werden. An dem oberen Führungselement 22 ist eine obere Siegelbacke 26 befestigt, während an dem unteren Führungselement 24 eine untere Siegelbacke 28 befestigt ist. Bei einer Bewegung der Führungselemente 22, 24 aufeinander zu bewegen sich somit auch die Siegelbacken 26, 28 aufeinander zu. Im Bereich der Unterstützungsplatte 20 kann dann das Versiegeln der Beutelöffnung 14 des Folienbeutels 12 durch die beiden Siegelbacken 26, 28 erfolgen. Bei diesem Versiegeln der Beutelöffnung 14 wird das dreidimensionale Objekt 16 in die Beutelöffnung 14 eingesiegelt.

An den Führungselementen 22, 24 ist jeweils eine Klemmbacke 30, 32 federnd gelagert. Die Klemmbacken 30, 32 sind dabei im Bereich des Folienbeutels 12 knapp unterhalb der Beutelöffnung 14 angeordnet, so dass die Klemmbacken 30, 32 die Siegelbacken 26, 28 nicht behindern. Die Klemmbacken 30, 32 werden bei einer Bewegung der Führungselemente 22, 24 ebenfalls mitbewegt. Die Klemmbacken 30, 32 sind jedoch im Vergleich der Siegelbacken 26, 28 etwas nach hinten versetzt. Werden die Führungselemente 22, 24 aufeinander zu bewegt, so wird das dreidimensionale Objekt 16 im Bereich der Beutelöffnung 14 des Folienbeutels 12 zunächst durch die beiden Klemmbacken 30, 32 zusammengedrückt. Dadurch kann bei flexiblen dreidimensionalen Objekten 16 eine flache Siegelung ermöglicht werden. Die beiden Klemmbacken 30, 32 sind jeweils über eine Feder 34 an den Führungselementen 22, 24 gelagert. Durch die Feder 34 können die Klemmbacken 30, 32 so weit eingefedert werden, dass die beiden Siegelbacken 26, 28 aufeinander aufliegen können und der Siegelprozess gestartet werden kann. Sofern es sich bei dem dreidimensionalen Objekt 16 um ein nicht-flexibles Objekt handelt, könnte auf die Klemmbacken 30, 32 auch verzichtet werden.

Im vorliegenden Beispielsfall ist unmittelbar neben den Klemmbacken 30, 32 eine linke Halteeinrichtung 36 sowie eine rechte Halteeinrichtung 38 an den Führungselementen 22, 24 befestigt. Jede Halteeinrichtung 34, 36 besitzt eine Biegefeder 40, die mit ihrem äußeren Ende an dem Führungselement 22, 24 befestigt ist. Die Halteeinrichtungen 36, 38 werden somit ebenfalls durch die Führungselemente 30, 32 bewegt, so dass kein separater Antrieb für die Halteeinrichtungen 36, 38 erforderlich ist. An dem inneren Ende der Feder 40 ist jeweils ein Klemmschuh 42, 44 befestigt. Dabei bildet jeweils ein oberer Klemmschuh 42 und ein unterer Klemmschuhe 44 ein Klemmschuh-Paar einer Halteeinrichtung 36, 38. Bevor die Siegelbacken 26, 28 aufeinandertreffen, greift jeweils ein oberer Klemmschuh 42 und ein unterer Klemmschuh 44 den seitlichen Randbereich 46 des Folienbeutels 12 und klemmt diesen ein. Beim weiteren Zusammenfahren der beiden Siegelbacken 26, 28 wird durch die Biegefedern 40 eine überlagerte horizontale Bewegung erzeugt, durch die die beiden Randbereiche 46 des Folienbeutels 12 nach außen gezogen werden. Die Beutelöffnung 14 wird auf diese Weise vor dem eigentlichen Siegelvorgang nach außen gezogen und damit um das dreidimensionale Objekt 16 gespannt. Dadurch können keine Falten oder Kanäle in der Siegelnaht entstehen.

Die Klemmschuhe 42, 44 stehen dabei ein Stück weit über die beiden Siegelbacken 26, 28 über. Dadurch kann gewährleistet werden, dass die Klemmschuhe 42, 44 die Beutelränder 46 bereits vor dem Anbringen der Siegelnaht nach außen ziehen.

Damit die Kontaktflächen der Klemmschuhe 42, 44 unabhängig von deren Position immer parallel zueinander - und damit auch parallel zu dem Folienbeutel 12 - ausgerichtet sind, sind die Klemmschuhe 42, 44 im vorliegenden Beispielsfall jeweils über ein Gelenk 48 an der Biegefeder 40 befestigt.

## Patentansprüche

1. Vorrichtung (10) zum Einsiegeln von dreidimensionalen Objekten (16) in die Beutelöffnung (14) eines Folienbeutels (12),
- mit einer Halteeinrichtung (36, 38) für den Folienbeutel (12), die beidseitig jeweils ein Paar Klemmschuhe (42, 44) aufweist, zwischen denen der Rand der Folienbeutel (12) haltbar ist,
- mit einer Siegeleinrichtung (26, 28) zum Einsiegeln des dreidimensionalen Objekts (16) in die Beutelöffnung (14) des Folienbeutels (12), wobei die Siegeleinrichtung (26, 28) ein Paar Siegelbacken (26, 28) aufweist, zwischen denen die Beutelöffnung (14) der Folienbeutel (12) versiegelbar ist,
- wobei die beiden Klemmschuh-Paare (42, 44) der Halteeinrichtung (36, 38) auseinanderfahrbar sind.
- **dadurch gekennzeichnet, dass**
- die Klemmschuhe (42, 44) jeweils an einer Feder (40), insbesondere an einer Biegefeder (40), befestigt sind, so dass bei der Bewegung der Siegelbacken (26, 28) aufeinander zu eine überlagerte Bewegung der Federn (40) voneinander weg erfolgt.

2. Vorrichtung nach Anspruch 1,
- **dadurch gekennzeichnet, dass**
- die Klemmschuhe (42, 44) mittels eines Gelenks (48) an der Feder (40) gelagert sind.

3. Vorrichtung nach Anspruch 1 oder 2,
- **dadurch gekennzeichnet, dass**
- zumindest einer der beiden Klemmschuhe (42, 44) eines Paares eine profilierte Kontaktfläche aufweist.

4. Vorrichtung nach einem der vorstehenden Ansprüche,
- **dadurch gekennzeichnet, dass**
- die Kontaktfläche der beiden Klemmschuh-Paare (42, 44) jeweils ein Stück weit über die Siegelbacken (26, 28) übersteht.

5. Vorrichtung nach einem der vorstehenden Ansprüche,
- **dadurch gekennzeichnet, dass**
- die Klemmschuhe (42, 44) jeweils in einer Langloch-Ausnehmung geführt sind.

6. Vorrichtung nach einem der vorstehenden Ansprüche,
- **dadurch gekennzeichnet, dass**
- die beiden Klemmschuh-Paare (42, 44) unmittelbar oberhalb der beiden Siegelbacken (26, 28) angeordnet sind.

7. Vorrichtung nach einem der vorstehenden Ansprüche,
- **dadurch gekennzeichnet, dass**
- die Siegeleinrichtung (26, 28) gemeinsam mit der Halteeinrichtung (36, 38) an einem Paar Führungselementen (22, 24) befestigt sind.

8. Vorrichtung nach einem der vorstehenden Ansprüche,
- **dadurch gekennzeichnet, dass**
- ein Paar Klemmbacken (30, 32) vorhanden ist, das vorauseilend zu den Siegelbacken (26, 28) angeordnet ist.

9. Vorrichtung nach Anspruch 8,
- **dadurch gekennzeichnet, dass**
- das Klemmbacken-Paar (30, 32) federnd gelagert ist.

10. Verfahren zum Einsiegeln von dreidimensionalen Objekten (16) in die Beutelöffnung (14) eines Folienbeutels (12) mit folgenden Verfahrensschritten,
- die Beutelöffnung (14) des Folienbeutels (12) wird mittels einer Bearbeitungseinrichtung geöffnet und ein dreidimensionales Objekt (16) wird im Bereich der Beutelöffnung (14) platziert,
- die beiden Ränder (46) des Folienbeutels (12) werden jeweils von einem Klemmschuh-Paar (42, 44) gehalten und auseinander gezogen, wobei die Klemmschuhe (42, 44 jeweils an einer Feder (40), insbesondere an einer Biegefeder (40) befestigt sind,
- nach dem Auseinanderziehen der Ränder (46) des Folienbeutels (12) wird die Beutelöffnung (14) des Folienbeutels (12) mittels zweier Siegelbacken (26, 28) versiegelt, indem das dreidimensionale Objekt (16) in die Beutelöffnung (14) eingesiegelt wird,
- **dadurch gekennzeichnet, dass**
- bei der Bewegung der Siegelbacken (26, 28) aufeinander zu eine überlagerte Bewegung der Federn (40) voneinander weg erfolgt.

11. Verfahren nach Anspruch 10,
- **dadurch gekennzeichnet, dass**
- die beiden Ränder des Folienbeutels (12) während des Versiegelns der Beutelöffnung (14) in ihrem auseinandergezogenen Zustand gehalten werden.

12. Verfahren nach Anspruch 10 oder 11,
- **dadurch gekennzeichnet, dass**
- der Folienbeutels (12) vor dem Siegeln der Beutelöffnung (14) teilweise kollabiert wird, vorzugsweise mittels eines Klemmbacken-Paares (30, 32).

13. Verfahren nach Anspruch 12,
- **dadurch gekennzeichnet, dass**
- die beiden Ränder (46) des Folienbeutels (12) bereits während des Kollabierens des Folienbeutels (12) auseinandergezogen werden.

## Claims

1. Device (10) for sealing three-dimensional objects (16) into the bag opening (14) of a film bag (12),
- having a holder (36, 38) for the film bag (12) that on either side has a respective pair of clamping shoes (42, 44) between which the edge of the film bags (12) can be held,
- having a sealing facility (26, 28) for sealing the three-dimensional object (16) into the bag opening (14) of the film bag (12), the sealing facility (26, 28) having a pair of sealing jaws (26, 28) between which the bag opening (14) of the film bags (12) can be sealed,
- wherein the two clamping shoe pairs (42, 44) of the holder (36, 38) can be moved apart from one another,
- **characterized in that**
- the clamping shoes (42, 44) are each secured on a spring (40), more particularly on a bending spring (40), so that on the movement of the sealing jaws (26, 28) towards one another there is an overlaid movement of the springs (40) away from one another.

2. Device according to Claim 1,
- **characterized in that**
- the clamping shoes (42, 44) are mounted on the spring (40) by means of a hinge joint (48).

3. Device according to Claim 1 or 2,
- **characterized in that**
- at least one of the two clamping shoes (42, 44) of a pair has a profiled contact face.

4. Device according to any of the preceding claims,
- **characterized in that**
- the contact face of the two clamping shoe pairs (42, 44) in each case protrudes slightly beyond the sealing jaws (26, 28).

5. Device according to any of the preceding claims,
- **characterized in that**
- the clamping shoes (42, 44) are each guided in a slotted opening.

6. Device according to any of the preceding claims,
- **characterized in that**
- the two clamping shoe pairs (42, 44) are arranged directly above the two sealing jaws (26, 28).

7. Device according to any of the preceding claims,
- **characterized in that**
- the sealing facility (26, 28) together with the holder (36, 38) are secured on a pair of guide elements (22, 24) .

8. Device according to any of the preceding claims,
- **characterized in that**
- a pair of clamping jaws (30, 32) is present and is arranged ahead of the sealing jaws (26, 28).

9. Device according to Claim 8,
- **characterized in that**
- the clamping jaw pair (30, 32) is spring-mounted.

10. Method for sealing three-dimensional objects (16) into the bag opening (14) of a film bag (12), having the following method steps:
- the bag opening (14) of the film bag (12) is opened by means of a processing facility, and a three-dimensional object (16) is placed in the region of the bag opening (14),
- the two edges (46) of the film bag (12) are respectively held by a clamping shoe pair (42, 44) and pulled apart from one another, the clamping shoes (42, 44) each being secured on a spring (40), more particularly on a bending spring (40),
- after the edges (46) of the film bag (12) have been pulled apart, the bag opening (14) of the film bag (12) is sealed by means of two sealing jaws (26, 28), with the three-dimensional object (16) being sealed into the bag opening (14),
- **characterized in that**
- on the movement of the sealing jaws (26, 28) towards one another there is an overlaid movement of the springs (40) away from one another.

11. Method according to Claim 10,
- **characterized in that**
- the two edges of the film bag (12) are held in their pulled-apart state during the sealing of the bag opening (14) .

12. Method according to Claim 10 or 11,
- **characterized in that**
- before the sealing of the bag opening (14), the film bag (12) is partially collapsed, preferably by means of a clamping jaw pair (30, 32).

13. Method according to Claim 12,
- **characterized in that**
- the two edges (46) of the film bag (12) are already pulled apart from one another during the collapsing of the film bag (12).

## Revendications

1. Dispositif (10) d'insertion et de scellement d'objets tridimensionnels (16) dans l'ouverture (14) d'un sac pelliculaire (12), ledit dispositif comprenant
- un module de retenue (36, 38), destiné au sac pelliculaire (12), qui comporte des deux côtés une paire de patins de serrage (42, 44) entre lesquels le bord du sac pelliculaire (12) peut être maintenu,
- un module de scellement (26, 28) destiné à insérer et sceller l'objet tridimensionnel (16) dans l'ouverture (14) du sac pelliculaire (12), le module de scellement (26, 28) comportant une paire de mâchoires de scellement (26, 28) entre lesquelles l'ouverture (14) du sac pelliculaire (12) peut être scellée,
- les deux paires de patins de serrage (42, 44) du dispositif de retenue (36, 38) pouvant être écartées,
- **caractérisé en ce que**
- les patins de serrage (42, 44) sont fixés chacun à un ressort (40), notamment à un ressort spiral (40), de façon à effectuer un écartement superposé des ressorts (40) l'un de l'autre lorsque les mâchoires de serrage (26, 28) se rapprochent l'une de l'autre.

2. Dispositif selon la revendication 1,
- **caractérisé en ce que**
- les patins de serrage (42, 44) sont montés sur le ressort (40) au moyen d'une articulation (48).

3. Dispositif selon la revendication 1 ou 2,
- **caractérisé en ce que**
- au moins un des deux patins de serrage (42, 44) d'une paire comporte une surface de contact profilée.

4. Dispositif selon l'une des revendications précédentes,
- **caractérisé en ce que**
- la surface de contact des deux paires de patins de serrage (42, 44) fait un peu saillie des mâchoires de scellement (26, 28).

5. Dispositif selon l'une des revendications précédentes,
- **caractérisé en ce que**
- les patins de serrage (42, 44) sont chacun guidés dans un évidement oblong.

6. Dispositif selon l'une des revendications précédentes,
- **caractérisé en ce que**
- les deux paires de patins de serrage (42, 44) sont disposées directement au-dessus des deux mâchoires de scellement (26, 28).

7. Dispositif selon l'une des revendications précédentes,
- **caractérisé en ce que**
- le module de scellement (26, 28) est fixé conjointement au module de retenue (36, 38) à une paire d'éléments de guidage (22, 24).

8. Dispositif selon l'une des revendications précédentes,
- **caractérisé en ce que**
- une paire de mâchoires de serrage (30, 32) est prévue qui est disposée en avant des mâchoires de scellement (26, 28).

9. Dispositif selon la revendication 8,
- **caractérisé en ce que**
- la paire de mâchoires de serrage (30, 32) est montée de manière élastique.

10. Procédé d'insertion et de scellement d'objets tridimensionnels (16) dans l'ouverture (14) d'un sac pelliculaire (12), ledit procédé comprenant les étapes suivantes,
- l'ouverture (14) du sac pelliculaire (12) est ouverte au moyen d'un module de traitement et un objet tridimensionnel (16) est placé dans la zone de l'ouverture (14),
- les deux bords (46) du sac pelliculaire (12) sont chacun maintenus par une paire de patins de serrage (42, 44) et écartés, les patins de serrage (42, 44) étant chacun fixés à un ressort (40), en particulier à un ressort spiral (40),
- après avoir écarté les bords (46) du sachet pelliculaire (12), l'ouverture (14) du sac pelliculaire (12) est scellée au moyen de deux mâchoires de scellement (26, 28) du fait que l'objet tridimensionnel (16) est inséré et scellé dans l'ouverture (14),
- **caractérisé en ce que**
- un écartement superposé des ressorts (40) l'un de l'autre est effectué lorsque les mâchoires de scellement (26, 28) se rapprochent l'une de l'autre.

11. Procédé selon la revendication 10,
- **caractérisé en ce que**
- les deux bords du sac pelliculaire (12) sont maintenus écartés pendant que l'ouverture (14) est scellée.

12. Procédé selon la revendication 10 ou 11,
- **caractérisé en ce que**
- le sac pelliculaire (12) est partiellement aplati avant de sceller l'ouverture (14), de préférence au moyen d'une paire de mâchoires de serrage (30, 32).

13. Procédé selon la revendication 12,
- **caractérisé en ce que**
- les deux bords (46) du sac pelliculaire (12) sont écartés tandis que le sac pelliculaire (12) est aplati.
